# EUROPEAN PATENT APPLICATION

(11) **EP 2 374 633 A1**
(43) Date of publication of application: **12.10.2011**
(21) Application number: 10250742.3
(22) Date of filing: 08.04.2010
(51) Int. Cl.: B60B 7/00, F41H 3/00

(54) **Thermal signature reduction**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The thermal signature of a vehicle is reduced by providing a thermal shield (20) on at least one of the wheels (10) covering at least a greater part of the wheel area, in combination with a further shield (42,50) around or depending from the wheel arch (19) and which overlaps the wheel-mounted shield (20). The shields (20,42,50) may also co-operate to reduce the generation of a dust cloud (45,46) by the vehicle.

## Description

This invention relates to the reduction of the thermal signatures of wheeled vehicles. The term "wheeled vehicle" as used herein includes a tracked vehicle because such vehicles have visible wheels around which the tracks run.

In military operations, a vehicle is vulnerable to detection at night or in other conditions of poor visibility by thermal imaging. The wheels are often prominent in a thermal image of a vehicle, because of heat generated by the vehicle's brakes, by heat generated in the vehicle's tyres by friction with the road or other surface over which it is travelling, and by the conversion into heat of energy absorbed by the tyre during flexure.

A vehicle also is made more vulnerable to detection due to dust thrown-up by its wheels or tracks when travelling over dusty surfaces for example as in deserts. The resulting dust cloud may be visible from a considerable distance and may also have a substantial radar signature.

The present invention can offer an integrated approach to the reduction of these problems.

According to the invention, there is provided apparatus for reducing the thermal signature of a wheel and adjacent parts of a vehicle, comprising a first thermal shield configured to be mounted outwardly from the wheel and extending over at least a substantial portion of the radial extent thereof, and a further thermal shield configured to be mounted from fixed structure of the vehicle outwardly of the first thermal shield, and to overlap at least part of said first thermal shield.

When the wheel is fitted with a tyre, the first thermal shield preferably also extends over a substantial portion of the radial extent of the tyre.

The apparatus preferably comprises mounting means for mounting the first thermal shield so as to be spaced apart from the wheel outwardly thereof.

The overlapping of the two thermal shields can reduce the thermal signature of any radially outer part of the wheel which is not covered by the first thermal shield. In non-tracked vehicles for example, the first thermal shield preferably is of rather smaller diameter than the tyre so that it does not permanently contact the ground during movement of the vehicle on a relatively smooth surface such as a road. It may intermittently contact the ground when the vehicle is passing over an irregular surface, and therefore the first thermal shield preferably is flexible to accommodate such contact.

The first thermal shield may comprise brush means.

The brush means may extend radially outwardly from a central portion of the shield which is configured for mounting from the vehicle wheel.

The brush means may comprise radially-extending bristles.

There may be a flexible support for the brush means extending over a radially inner portion thereof. The flexible support may be a disc e.g. of an elastomeric material configured to be disposed between the wheel and the brush means. Alternatively it may be configured to be disposed outwardly of the brush means relative to the wheel.

Preferably the further thermal shield is configured also to suppress dust thrown up by the vehicle.

The further thermal shield may be configured to be mounted from a wheel arch of the vehicle.

The further thermal shield may comprise brush means extending around a wheel arch of the vehicle and projecting towards an axis of rotation of the wheel.

Alternatively it may comprise a skirt configured to be mounted so as to extend downwardly over a substantial portion of the first thermal shield.

Preferably the first and further thermal shields are comprised of materials having the same or similar emissivity.

The first thermal shield, being mounted from the outer surface of the wheel, also can assist in dust suppression by capturing some of the dust thrown up at the lower part of the wheel and retaining it for a long enough period of time so that when it is released it is behind the further thermal shield and its escape is impeded.

The invention now will be described merely by way of example with reference to the accompanying drawings, wherein
Figure 1 shows the thermal signature of a typical vehicle;
Figure 2 shows schematically a dust-cloud generated by a conventional vehicle wheel
Figure 3 and 4 show two embodiments of the present invention, and
Figure 5 shows part of the structure of the embodiments of figures 3 and 4.

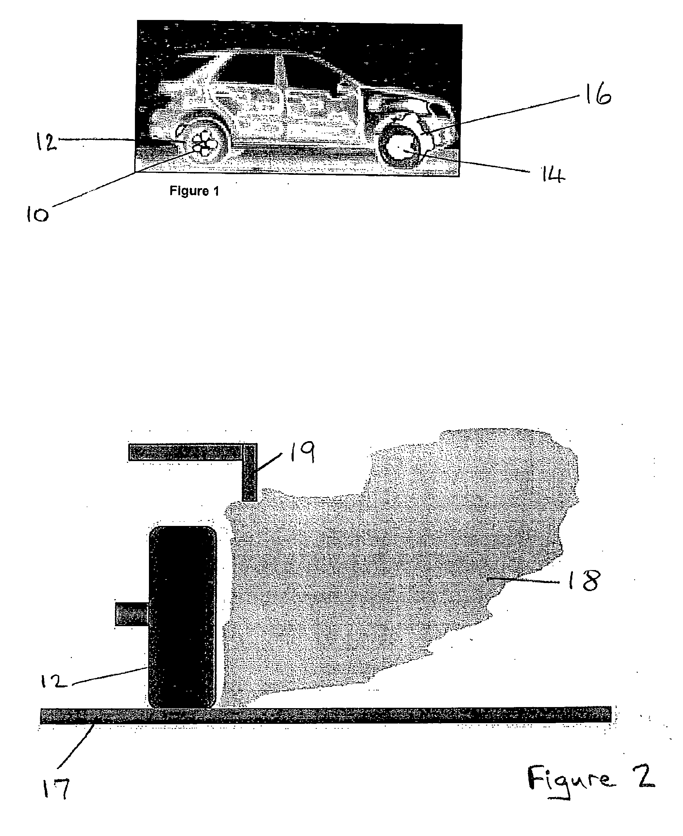

Referring to Figure 1, there is shown the thermal signature of a vehicle viewed from the side. It can be seen that most of the vehicle (here a conventional civilian 4x4) has a relatively low thermal signature, which could be further reduced for military purposes by the use of low-emissivity paint. However, the wheels 10, tyres 12 and associated structures especially the brake discs, calipers and wheel bearings 14 visible through the wheels, have prominent thermal signatures. The engine 16 may also be an adjacent source of heat visible through the wheel arch around the tyre 11. The vehicle is thereby rendered more vulnerable to detection by infra-red sensors. Furthermore, as shown in Figure 2, dust 18 thrown up by the tyres 12 from the ground 17 is projected sideways, upwards and to the rear of the vehicle; and is not contained by the wheel arch 19. This problem, and also the thermal visibility of the engine through the wheel arch is exacerbated if the vehicle has large wheel arches relative to the wheels to accommodate the extended suspension travel required in vehicles with an off-road capability.

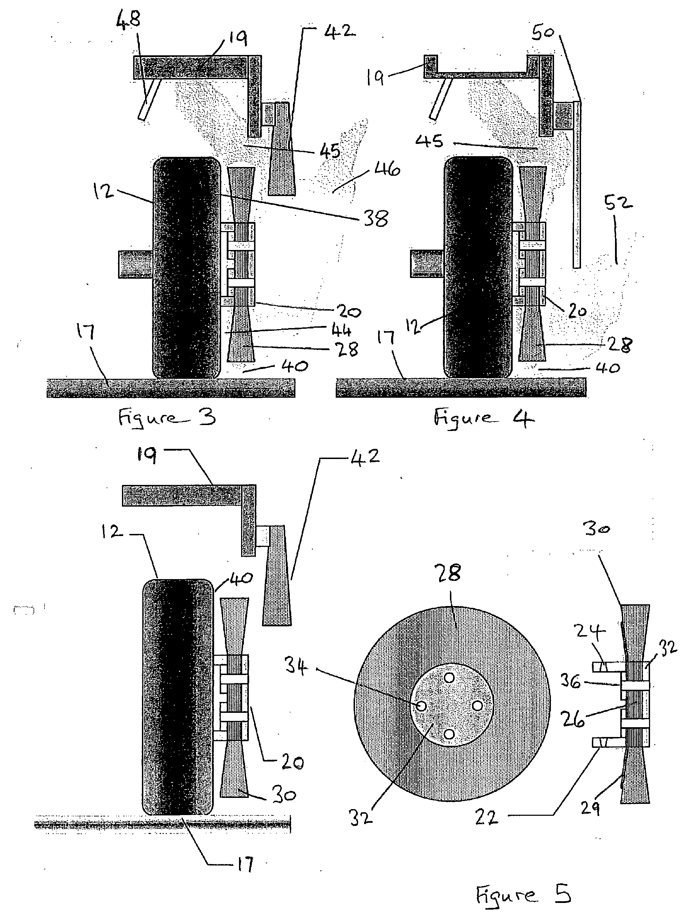

In an embodiment of the invention shown in Figure 3 and 5 a thermal shield 20 of low emissivity is fitted from the outer side of the wheel 10. The shield 20 comprises an inner carrier 22 which attaches to the wheel by means of securing bolts or grub screws passed through radially-extending holes 24.

A brush disc comprising a compressed central portion 26 and radially - extending bristles 30 is retained on the carrier 22 by a retaining plate 32 e.g. of plastics, glass reinforced plastics or aluminium. The plate 32 is fixed to the carrier 22 by bolts (not shown) passing through bores 34 in the retaining plate 32 and the disc 28 to threaded holes 36 in the carrier 22. The bristles 30, may be partially backed with a thin disc of flexible rubber type material 29 (shown only in figure 5) to keep the brush 28 in shape during manoeuvring of the vehicle.

The bristles 30 extend over the wheel 10 and the greater part of the radial extent of the sidewall 38 of its tyre 12. A radial clearance 40 is left so that in normal circumstances the ends of the bristles will not contact the ground 19. If however the vehicle is travelling over uneven ground, the ends of the bristles may come into contact with the ground due to increased flexure of the tyre and suspension travel. The bristles are of a suitably flexible material e.g. of nylon, polyamide or polypropylene so that they deflect when they contact the ground.

Preferably the carrier 22 is dimensioned so that the brush 28 is spaced outwardly from the wheel as illustrated. This assists in thermally insulating it from the wheel, and aids the entrainment of dust behind the brush as described hereinafter. It also permits the sidewalls of the tyre to flex outwardly without deforming the brush.

Around the outer periphery of the wheel arch 19 is another brush 42, made of the same material as the brush 28. The bristles of the brush 42 extend inwards towards and partially overlap the bristles 30 of the brush 28. The brush 42 thus thermally shields the outer part 40 of the tyre which is within the angular compass of the wheel arch 19 and which is not shielded by the brush 28. Indeed the brush 42 covers all of the interior of the wheel arch 19 which is not occupied by the wheel, and thus also shields any thermal signatures of the engine or other components of the vehicle which are visible around the wheels through the wheel arch 19.

As shown schematically in Figure 3, some of the dust thrown up by the tyre 11 is captured within the brush 28 and in the space behind it as shown at 44 and is carried round with rotation of the wheel until it is within the dust-suppressing brush 42 as at 45. The brush 42 contains the dust within the wheel arch long enough for much of it to fall back to the ground. That dust which does escape can result in a smaller cloud 46 than the cloud 18 (Figure 2) which is generated under the same conditions by a vehicle not fitted with the invention. A dust cover or wheel arch liner (partially shown at 48) may be provided with the wheel arch 19 to reduce the ingress of dust into the engine compartment or underneath of the vehicle. Dust which escapes underneath the vehicle from the wheel arches subsequently may exit from beneath the rear or sides of the vehicle, causing a further dust cloud. To reduce this, further brush strips may be fitted across the rear and/or along the sides of the vehicle, so as to project downwardly almost to the ground.

Figure 4 shows another embodiment of the invention in which corresponding parts have the same reference numerals as in Figure 3. The part-annular brush 42 is replaced by a skirt 50 which depends from the outer margin of the wheel arch 19 downwardly over at least the upper part of the wheel and tyre 10, 12. The skirt, 50, which may be of flexible material, e.g. a tough fabric, or strips of rubber, operates in combination with the brush 28 to contain the dust as described for the brush 42, and similarly overlaps the brush 28 to reduce the thermal signatures of otherwise-exposed hot parts of the wheel and wheel arch areas. Because the skirt 50 overlaps the brush 28 to a greater extent than does the brush 42 of Figure 3, the extent of the dust cloud 52 may be further reduced. Skirts may also be fitted to the rear and sides of the vehicle instead of the additional brush strips.

The effectiveness of the thermal shield 28, 32, 42 of Figure 3 and 28, 32 50 of Figure 4 may be further enhanced by painting or otherwise coating them (including the bristles of the brushes 28, 42) with a low thermal-emissivity paint such as one of those available commercially, for example as marketed by the Internet SA. The colour advantageously can be chosen to blend with a camouflage paint scheme of the vehicle, e.g. sand-coloured for use in desert operations.

The brushes 42 and shirts 50 must of course be positioned sufficiently outwardly of steered wheels of the vehicle to permit the wheels to be turned from lock-to-lock without the brushes 28 coming into contact with the brushes 42 or skirts 50.

The invention also includes any novel features or combination of features herein disclosed, whether or not specifically claimed. The abstract of the invention is repeated here as part of the disclosure

The thermal signature of a vehicle is reduced by providing a thermal shield for at least one of the vehicle's wheels covering at least a greater part of the wheel area, in combination with a further shield around or depending from the wheel arch and which overlaps the wheel-mounted shield. The shields may also co-operate to reduce the generation of a dust cloud by the vehicle.

## Claims

1. Apparatus for reducing the thermal signature of a wheel and adjacent parts of a vehicle comprising a first thermal shield configured to be mounted outwardly from the wheel and to extend over at least a substantial portion of the radial extent thereof, and a further thermal shield configured to be mounted from fixed structure of the vehicle outwardly of the first thermal shield, and to overlap at least part of said first shield.

2. The apparatus of claim 1 wherein the first shield is configured to extend over a substantial portion of the radial extent of a tyre of the wheel.

3. The apparatus of claim 1 or claim 2 comprising mounting means for mounting the first shield from the wheel as to be spaced-apart therefrom.

4. The apparatus of any preceding claim wherein the first shield is flexible so as to accommodate contact with the ground during use.

5. The apparatus of any preceding claim wherein the first shield comprises brush means.

6. The apparatus of claim 5 wherein the brush means extend radially outwardly from a central portion of the first shield which is configured for mounting from the vehicle wheel.

7. The apparatus of claim 6 wherein the brush means comprises radially-extending bristles.

8. The apparatus of claim 6 or claim 7 comprising a flexible support for the brush means extending over a radially inner portion thereof.

9. The apparatus of any preceding claim wherein the further thermal shield is configured also to suppress dust thrown up by the vehicle.

10. The apparatus of any preceding claim wherein the further thermal shield is configured to be mounted from a wheel arch of the vehicle.

11. The apparatus of any preceding claim wherein the further thermal shield comprises brush means extending around a wheel arch of the vehicle and projecting towards an axis of rotation of the wheel.

12. The apparatus of any of claims 1 to 10 wherein the further thermal shield comprises a skirt configured to be mounted so as to extend downwardly over a substantial portion of the first thermal shield.

13. The apparatus of any preceding claim wherein the first and further thermal shields are comprised of materials having the same or similar emissivity.

14. A vehicle comprising the apparatus of any preceding claim.
